# EUROPEAN PATENT SPECIFICATION

(11) **EP 1 685 077 B1**
(45) Date of publication and mention of the grant of the patent: **05.06.2013**
(21) Application number: 04819125.8
(22) Date of filing: 16.11.2004
(51) Int. Cl.: C04B 22/00, C04B 28/02

(54) **METHOD OF MAKING CEMENTITIOUS SLAB PRODUCTS HAVING ANTIMICROBIAL PROPERTIES**
VERFAHREN ZUR HERSTELLUNG VON ZEMENTPLATTENPRODUKTEN MIT ANTIMIKROBIELLEN EIGENSCHAFTEN
PROCEDE DE MANUFACTURE DES PRODUITS DE DALLE CIMENTAIRE POSSEDANT DES PROPRIETES ANTIMICROBIENNES

(30) Priority: 17.11.2003 US 520799 P
(43) Date of publication of application: 02.08.2006
(73) Proprietor: MICROBAN PRODUCTS COMPANY, Huntersville, NC 28078 (US)
(72) Inventor: ONG, Ivan, Wei-Kang, Charlotte, NC 28210 (US); WALKER, Gerald, W., Peterborough PE2 9RL (GB)
(74) Representative: Hayes, Adrian Chetwynd
(86) International application number: PCT/US2004/038072
(87) International publication number: WO 2005/049293

(56) References cited:
- JP-A- 9 255 400
- US-A- 2 439 441
- US-A- 5 698 229
- US-A- 5 968 253
- US-A- 5 968 253
- US-B1- 6 197 805
- US-B1- 6 355 191
- US-B1- 6 752 867
- US-B1- 6 752 867

## Description

### FIELD OF THE INVENTION

The invention relates to the production of a composite material suitable for forming cementitious slab products and the slab products made there from. The disclosure also relates to a material having the appearance of marble and/or granite with improved properties including antimicrobial properties as compared to other natural or synthetic materials.

### BACKGROUND OF THE INVENTION

Polished natural stones, such as marble or granite and other igneous forms of crystalline silica or siliceous rock, are often used as decorative and functional facing and surfaces in long-lasting construction applications. However, these products require expensive handling in shaping and finishing and are only available from relatively few geographic regions. These factors significantly add to the already high cost of employing such materials.

Furthermore, every block extracted from a quarry differs, sometimes slightly and sometimes considerably, from other blocks extracted from the same quarry. Accordingly, it is almost impossible to produce floors or claddings with large surface areas which do not have aesthetic and/or color differences.

The extraction of natural stone from quarries creates a large quantity of unusable rock. Imperfections in the natural stone render it very susceptible to breakage. The blasting and rough handling of stone in quarries renders most of the stone unusable. It is estimated that the percentage of stone that is sent in the form of blocks for subsequent processing does not exceed 20 - 30% of the total stone that is excavated.

Several uses have been found for the large amount of waste material generated by quarries. One such use of this waste material is as a component of artificial stone products.

Artificial stone products are generally made from a mixture of a natural stone aggregate and a suitable binder. Generally speaking, there are two types of binders: polymers and cementitious binders. Using modem engineering techniques, such as those described in U.S. Patents 6,355,191, 4,698,010, and 5,321,055, all of which are incorporated herein by reference, it is possible to achieve products that have a remarkable resemblance to natural stone. These products usually offer better color consistency than natural stone, exhibit better mechanical properties than natural stone, and cost less than natural stone.

Many of these products find use as artificial granite for flooring, walkways, and external cladding for buildings. Thus, these artificial stone products are normally found in aesthetically important areas and in close proximity to human activity. These are also areas where the growth of bacteria, mold, mildew, and fungus is highly undesirable.

These artificial stone products, although superior to natural stone in many ways, retain a problem that is inherent with natural stone. Natural stone can be quite porous and can absorb liquids that come into contact with it. If a cementitious binder is used in the making of an artificial stone product this tendency to absorb water is increased. This tendency to absorb liquid can lead to staining and water marking. The water absorbed by the stone particles also provides a moist environment suitable for growth of microorganisms that can stain the product, produce slick and dangerous surfaces, produce unwanted odors, contaminate food, act as a cross-contamination vector, and promote illness.

In short, the increased use of artificial stone products in areas of high human contact has generated a need for reducing or eliminating the potential for growth of microorganisms on the surface of the artificial stone.

### SUMMARY OF THE INVENTION

The present disclosure relates to a composite material suitable for forming cementitious slab products having antimicrobial properties. The composite material comprises a natural aggregate, a cementitious matrix, and an antimicrobial agent which is tolyl diiodomethyl sulfone. The composite material has an appearance similar to that of natural stone yet reduces or eliminates the presence of microbes on the surface of the material.

The present invention also relates to a method of making a cementitious product having antimicrobial properties. The method comprises obtaining a natural aggregate; preparing a cementitious matrix comprising a water and cement slurry and a plasticizing additive; mixing the natural aggregate and the cementitious matrix; adding an antimicrobial agent to the aggregate and cementitious matrix; spreading the mixture of aggregate, cementitious matrix; and antimicrobial agent in a forming device; deaerating the spread mixture of aggregate, cementitious matrix, and antimicrobial agent by placing the spread mixture under a vacuum; applying a vibratory motion to the deaerated mixture while the deaerated mixture is under a vacuum; and curing the deaerated spread mixture to form a cementitious product, wherein the antimicrobial agent is tolyl diiodomethyl sulfone.

It is another aspect of the present invention to form a finished product from the cementitious product.

The present disclosure provides such materials in a cost effective manner suitable for widespread commercial use.

### BRIEF DESCRIPTION OF THE DRAWINGS

The present invention will become more fully understood from the detailed description and the accompanying drawings, wherein:

Figure 1 is a photograph after inoculation with a fungal species of a cementitious flooring tile sample that comprises no antimicrobial agent and offers no resistance to fungal growth.

Figure 2 is a photograph after inoculation with a fungal species of a cementitious flooring tile sample that comprises an antimicrobial in accordance with the present invention and exhibits resistance to fungal growth.

Figure 3 is a photograph after moculation with a fungal species of a cementitious flooring tile sample that comprises an antimicrobial in accordance with the present invention and exhibits resistance to fungal growth.

Figure 4 is a photograph after inoculation with a fungal species of a cementitious flooring tile sample that comprises an antimicrobial in accordance with the present invention and exhibits resistance to fungal growth.

Figure 5 is a photograph after inoculation with a fungal species of a cementitious flooring tile sample that comprises a comparative antimicrobial agent and shows some signs of fungal growth.

Figure 6 is a photograph after inoculation with a fungal species of a cementitious flooring tile sample that comprises a comparative antimicrobial agent and shows some signs of fungal growth

Figure 7 is a photograph after inoculation with a fungal species of a cementitious flooring tile sample that comprises a comparative antimicrobial agent and shows some signs of fungal growth.

### DETAILED DESCRIPTION OF THE INVENTION

The present invention is applicable to a variety of composites comprising natural aggregates such as marble, granite, quartz, feldspar, quartzite and mixtures thereof Such composites are increasingly used as substitutes for solid slabs of natural stone because they are more cost effective and can be engineered to achieve specific structural and aesthetic characteristics

As used herein, the term "natural aggregate" primarily means crushed natural stone and minerals Specifically, the term "natural aggregate" will be understood to include aggregates comprising marble, granite, quartz, feldspar, quartzite and a mixture thereof. Likewise, the term "filler" will be understood to include materials that are often added to compositions to provide particular characteristics Such "fillers" include fumed silica, sand, clay, fly ash, calcium carbonate, broken ceramics, mica, silicate flakes, broken glass, glass beads, glass spheres, mirror fragments, steel grit, aluminum gnt, carbides, plastic beads, pelletized rubber, ground polymer composites (e g , acrylics encasing copper filings), wood chips, sawdust, paper laminates, pigments, colorants, and a mixture thereof.

In broad terms, the disclosure relates to an improvement on a structural material having an appearance similar to natural stone. In one of the disclosure's most basic embodiments, it is a composite material suitable for forming cementitious slab products having an appearance similar to that of natural stone. The material comprises a natural aggregate having a predetermined and controlled particle size, a cementitious matrix, and an antimicrobial agent which is tolyl diiodomethyl sulfone. The material may also comprise a plasticizer and one or more fillers.

The invention also encompasses a method for making the claimed composite material and for making products from the composite material. The claimed method is an improvement upon processes for making cementitious artificial stone. In broad terms, the claimed process comprises the steps of obtaining a natural aggregate having a predetermined particle size; preparing a cementitious matrix comprising a water and cement slurry and a quantity of a plasticizing additive; mixing the aggregate and the cementitious matrix; adding a quantity of an antimicrobial agent to the aggregate and cementitious matrix; spreading the mixture of aggregate, cementitious matrix, and antimicrobial agent in a forming device; deaerating the spread mixture of aggregate, cementitious matrix, and antimicrobial agent by placing the spread mixture under a vacuum; applying a vibratory motion to the deaerated mixture while the mixture is under a vacuum; and curing the deaerated spread mixture to form a cementitious product, wherein the antimicrobial agent is tolyl diiodomethyl sulfone.

Turning now to the specifics of the claimed process, the variables inherent in artificial stone making processes (e.g., the type and quantity of natural aggregate used, the type and quantity of cementitious matrix, the use of fillers, the thickness of the end product, etc.) prevent a thorough discussion of every possible permutation of variables. However, those skilled in the art are familiar with the basic concepts of the artificial stone process and the manipulation of the various variables to achieve desired results. Accordingly, those skilled in the art are readily capable of taking the teachings of the present disclosure and modifying them and the underlying artificial stone process to achieve a desired result without undue experimentation. The following discussion is offered as an example of how the invention may be incorporated into a typical artificial stone process. The following discussion is exemplary and should not be interpreted as unduly limiting the scope of the invention.

In accordance with the present invention, composite materials are manufactured in a streamlined process Natural aggregate of appropriate dimension, a cementitious matrix, and an antimicrobial agent, which is tolyl diiodomethyl sulfone, are mixed and distnbuted in a mold and then subjected to simultaneous application of a vacuum and vibration to cause the mixture to set in a rapid and predetermined way. Each aspect of this method will now be explored in more detail.

The method according to the invention comprises obtaining a natural aggregate having a predetermined particle size. Preferred embodiments of the method also include the step of calculating the void ratio (void fraction) of the aggregate for reasons discussed below

The natural aggregate suitable for use in the invention includes crushed natural stone and minerals. In preferred embodiments the natural aggregate is selected from the group consisting of quartz, granite, feldspar, marble, quartzite, and a mixture thereof Marble, granite, and quartz are particularly preferred. The size of the individual aggregate particles may vary depending upon the end use of the composite material and is ultimately limited by the size of the apparatus used Suitable apparatus, such as those discussed in U S Patent 6,355,191 are commercially available and will not be discussed in detail herein In a preferred process the average size of the individual aggregate particles is kept below about 100 mm, preferably below about 25 mm, and most preferably below about 10 mm. Aggregate with an average particle size from about 0.1 mm to about 6 mm is particularly preferred

Particle size is important to fully realize the benefits of the invention because of the unique relationship between aggregate void space and the quantity and type of cementitious matrix needed to bind the aggregate In very general terms, too much or too little cementitious matrix will result in poor quality product that has undesirable mechanical properties. Likewise, the ratio of water to cement in the cementitious matrix should be within a desired range to provide the matrix with the fluidity necessary to fully occupy the aggregate void space. U.S. Patent 6,355,191 provides a detailed discussion of this interaction between the aggregate, cement, and water and is incorporated herein by reference in its entirely A summary of this discussion is provided as an aid to the reader

If the starting granulated material is from the same source and is more or less homogeneous, it is preferred that the material is milled to a maximum particle size no greater than 6 mm (although, in some cases, this maximum size may reach 8 mm).

If, on the other hand, the starting granulated material is not homogeneous, or if different stone materials are mixed to achieve a particular color or effect, the composition of the starting granulated material may be pre-arranged by the application of one of the usual formula for calculating the composition and particle- size distribution used in the field of cementitious products with reference to the inert component.

Examples of these formulae are Fuller Thompson's formula, or Bolomey's formula. For the Fuller-Thompson formula, see N. B. Fuller, S. E. Thompson, Transactions ASCE, 59, 67 (1907). For Bolomey's formula, see J. Bolomey, Revue Mater, Costr. Trav. Publ., ed. C, page 147 (1947) as regards the Bolomey's formula, and these are discussed, for example, in M. Collepardi, Scienza e tecnologia del calcestruzzo, (Science and Technology of Concrete) pp. 292-303, editor Hoepli.

Once the starting granulated material and its composition and particle-size distribution have been identified, its void fraction can be calculated, for example, by formula 7.12 of the text indicated above.

The quantity of cementitious binding mix which is theoretically sufficient to fill the voids and interstices can be identified upon the basis of this void fraction. Those skilled in the art are familiar with the concept and it is discussed in detail in U.S. Patent 6,355,191. In preferred embodiments the quantity of cementitious matrix used will be slightly in excess of the theoretical amount; typically about 10% more than the theoretical amount.

The relative amount of natural aggregate in the composite material may vary depending upon the end use of the product. In most instances the natural aggregate will comprise from about 65% to about 85% by weight of the total composition. In preferred embodiments the natural aggregate will comprise from about 70% to about 75% by weight of the total composition.

In addition to the natural aggregate, a filler may be added to the aggregate and binder mixture. The filler may encompass any traditional material added to cementitious mixtures to add bulk and strength. Common fillers suitable for use with the invention include fumed silica, sand, clay, fly ash, broken ceramics, mica, silicate flakes, broken glass, glass beads, glass spheres, mirror fragments, steel grit, aluminum grit, carbides, plastic beads, pelletized rubber, ground polymer composites (e.g., acrylics encasing copper filings), wood chips, sawdust, paper laminates, pigments, colorants, and a mixture thereof.

The relative amount of filler used in the practice of the invention is also variable and depends upon the ultimate end use of the product. Fillers such as colorants are often added to the mixture to aid in achieving a uniform surface appearance. In fact, colorants often provide a useful carrier for other fillers and additives such as UV stabilizers which are commonly added to compositions destined for outdoor applications. Given the wide variety of fillers that may be used in the practice of the invention the quantity of filler in the overall composition can vary from 0% or a miniscule amount to about 12% by weight. The filler should not be present in amounts sufficient to reduce the effectiveness of the ultimate end product. Those skilled in the art of the artificial stone processes know the various considerations that govern the use of fillers in this process.

The method according to the invention also comprises the step of preparing a cementitious matrix comprising a water and cement slurry.

In preferred embodiments, the cementitious matrix is made from about equal parts, by volume, of cement and water. This mixture equates to a mixture having about 0.32 parts by weight of water relative to the weight of cement. In practice the cementitious matrix may have a water content of from about 0.25 to about 0.36 parts by weight relative to the weight of cement, preferably from about 0.28 to about 0.32 parts by weight. The cementitious matrix is preferably supplemented with a quantity of a known plasticizing additive for cementitious slurries such that, when the mix is poured onto a surface in order to carry out a "mini slump test", it has a fluidity such that the mix is arranged in a very thin layer with a roundish shape having a diameter of about 20 cm and there is no apparent separation between the water and the cement with the deposition of the cement in the bottom of the mold and the appearance of the water on the surface. The cementitious matrix comprises from about 15% to about 35% by weight of the total composition, more preferably from about 20% to about 30% by weight of the total composition.

The expression "mini slump test" means the simplified form of the slump test according to the method defined by the UNI 9418 standards. This test is discussed in more detail in U.S. Patent 6,355,191.

The method of the present invention continues with intimate mixing of the aggregate and the cementitious matrix. The quantity of cementitious matrix used is slightly in excess of the calculated theoretical void fraction of the granulated material. This excess,does not have to be such as to lead, upon completion of the method, to the formation of an independent layer constituted by cement alone on one of the two faces of the product. In practice, the excess is normally of the order of 10% of the initial volume of cementitious binding mix related to the total volume of the mixture of granulated material and cementitious binding mix.

The mixing can be carried out under vacuum. Applying a vacuum is often desirable under certain circumstances (e.g., when the final product has a thickness greater than about 5 cm) and is preferred in most applications. If a vacuum is utilized, it should be a controlled vacuum and applied at a level that will not cause the water in the cementitious matrix to boil. Vacuums below about 70 mm Hg are preferred in this step.

The method further comprises the step of adding an antimicrobial agent to the aggregate and cementitious matrix. It is possible to add the antimicrobial by adding a charge of liquid antimicrobial during the water addition stage or as a powder during the dry blending of the cement.

Tolyl diiodomethyl sulfone is commercially available as MICROBAN ADDITIVE AF^{™} from Microban Products Company of Huntersville, NC. Triclosan is commercially-available as MICROBAN ADDITIVE B^{™} from Microban Products Company of Huntersville, NC. Zinc pyrithione is commercially available as MICROBAN ADDITIVE ZO1^{™} from Microban Products Company of Huntersville, NC. Isothiazalinones such as Butyl-BIT, DCOIT and OIT are commercially available as MICROBAN ADDITIVE LB3^{™}, MICROBAN ADDITIVE LB5^{™}, and MICROBAN ADDITIVE LB6^{™}, respectively, from Microban Products Company of Huntersville, NC. The above antimicrobials are commercially available from Microban Products Company of Huntersville, NC as well as other suppliers.

The quantity of the antimicrobial agent in the composite structural material may vary depending upon the type and quantity of natural aggregate, the cementitious matrix; any filler, or other additives found in the composite material. The primary guideline for determining the necessary quantity of antimicrobial agent is that enough of the agent should be added to the composition to provide a commercially acceptable degree of efficacy against the microbe of concern.

In preferred embodiments the antimicrobial agent should be present in the composition at a level of at least 500 ppm based upon the total weight of the composition. Cost factors typically establish the upper limit of the quantity of antimicrobial agent at about 1% by weight (*i.e.,* 10,000 ppm). In most instances, the antimicrobial agent concentrations in the final product will be from about 100 ppm to about 10,000 ppm, most preferably from about 500 ppm to about 1500 ppm based upon the weight of the cured product.

It should be understood that in certain situations the preferred quantity of antimicrobial agent may deviate from those presented herein. Those skilled in the art, however, should be able to take the teachings of this invention and make the necessary adjustments without undue experimentation.

The antimicrobial agent may be added to the composition in several ways. The particular method of adding the antimicrobial agent will depend upon the overall process and the equipment used. In general, however, the antimicrobial agent may be added in one of two ways - directly or via a carrier.

For example, the antimicrobial agent can be added directly to the aggregate/cementitious mixture before the mixture is placed in the mold. Alternatively, the antimicrobial agent could be added during preparation of the cementitious matrix. Premixing the antimicrobial agent with the cement prior to adding water would be an example.

Alternatively, one could prepare a concentrated antimicrobial agent masterbatch which is then fed into the process at the appropriate point. An example of such a masterbatch would be to mix the antimicrobial agent with a colorant. Masterbatches of triclosan and colorant have historically worked well in this regard.

The method further comprises the step of spreading the resulting mixture in a mold or similar forming device to form a layer having a desired thickness. The spreading step is preferably done under vacuum if the mixing has taken place under vacuum. The thickness of the layer can range from less than a millimeter to several centimeters. Thicknesses between about 15 and about 20 millimeters are preferred for most end uses.

Once the mixture of aggregate and cementitious matrix is spread in a forming device the spread mixture is subjected to a very high vacuum for a period which is very short but long enough to bring about substantially complete deaeration of any interstices and to remove any air remaining incorporated in the starting mixture. In preferred embodiments the vacuum should be no less than 40 mm Hg.

This deaeration step should be very short and, in experimental tests it was found that it should preferably last no longer than 20 seconds. This short duration is necessary to prevent the water from boiling. Bubbles can cause imperfect compaction which is detrimental to the mechanical properties of the product. For products having a thickness greater than 5 cm longer deaeration may be required.

Upon completion of the deaeration step, the mold is subjected to vibration at a predetermined frequency, preferably from about 2000 to about 4800 cycles/min for a duration of between a few seconds to several minutes, usually less than 3 minutes. The mixture is preferably kept under vacuum, but at a level that is lower than that of previous step. In the case of slabs having thickness less than 5 cm the application of the vibratory motion should last for at around 60 seconds. Additional information regarding the vibration step may be found in U.S. patent 6,355,191.

After vibration and deaeration, the forming device is transferred to a setting and initial curing section.

In most instances setting and initial hardening occurs about 8 hours after vibration. Complete hardening to an extent sufficient for the mechanical removal of the product from the forming device generally occurs within 24 hours.

After the product is removed from the forming device it is stored to cure. For best results steps should be taken to prevent the evaporation of water from the curing product. Covering or enclosing the product in a waterproof material can prevent such evaporation.

The curing step preferably lasts at least 7 days. After this step it may be possible to cut or saw the product or carry out other finishing operations.

In the case of products having thickness greater than 5 cm, the initial curing step should last for at least 8 hours followed by a two-step final curing phase. The first step lasts about 7 days, in which the product is protected to avoid the water evaporation. The second step lasts for as long as needed for the completion of the curing.

Those skilled in the art realize that the curing step is not an "on and off" step but an event that occurs over a continuum. In fact, some curing can occur as early as the mixing step. For ease of discussion, however, the curing step is usually regarded as a separate step because it is normally the rate limiting step in a process and because the cure rate can be adjusted by adjusting process parameters.

Upon completion of the curing step the cured material is shaped into a finished product. Such products include tabletops, countertops, architectural facings, walkways, home furnishings, patio furniture, decorative stone, indoor and outdoor tile, flooring, mantles, bathroom fixtures, wall facings, cutting boards, sinks, showers, tubs, and imitation stone structures, among others.

### EXAMPLES

Flooring tile samples were prepared in a batch by mixing a dry powder cement, natural aggregate, an antimicrobial agent (if indicated present below) and water in order to make a slurry. The amount of antimicrobial agent added was based upon the total weight of the batch. The slurry was molded. The tiles were set and cured.

The green cementitious flooring tiles comprising MICROBAN ADDITIVE AF^{™} at levels ranging from 500 ppm to 1000 ppm were tested and found to be very effective in preventing the growth of Aspergillus niger on the surfaces of the tiles. MICROBAN ADDITIVE AF^{™} is commercially available from Microban Products Company of Huntersville, NC.

Green cementitious flooring tiles comprising MICROBAN ADDITIVE ZO1^{™} at levels ranging from 500 ppm to 1000 ppm were tested and found to offer poorer antifungal performance.

As the control, a green cementitious flooring tile comprising no antimicrobial additives was tested. The control was found to offer no resistance to fungus as it was freely populated by fungus.

All of the cementitious flooring tiles were tested using the AATCC 30 Part III Antifungal Test which is herein incorporated by reference. The test organism was Aspergillus niger, AATCC 6275. The incubation period was seven days. Prior to plating, the samples were neutralized by continuous soaking in 0.1M HCl. This was completed because the intrinsic high pH of the cementitious substrate may itself disrupt fungal growth. The soaking also simulated an "aged" tile sample where the surface alkalinity has been neutralized with time by carbon dioxide in the air and ambient moisture. At each trial level, duplicate samples were plated to evaluate consistency and reproducibility of antifungal behavior.

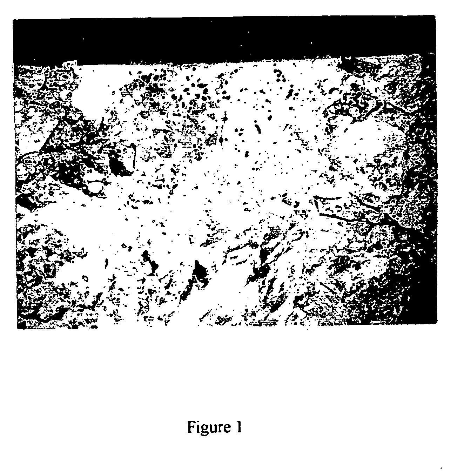

Figure 1 is a photograph of a cementitious flooring tile sample as a control that was exposed to Aspergillus niger and had no antimicrobial additives in the sample. The control tile surface showed significant evidence of fungal growth and propagation. Each tiny dark spot in the photograph was a well-developed fungal fruiting structure. The fungal organism appeared to be healthy and networked. The control sample exhibited no antifungal resistance.

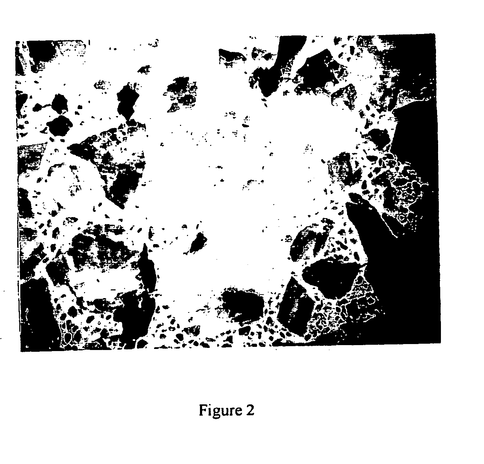

Figure 2 is a photograph of a cementitious flooring tile sample comprising 500 ppm of MICROBAN ADDITIVE AF^{™}. The surface of the cementitious flooring tile sample was extremely clean and showed no signs of fungal growth.

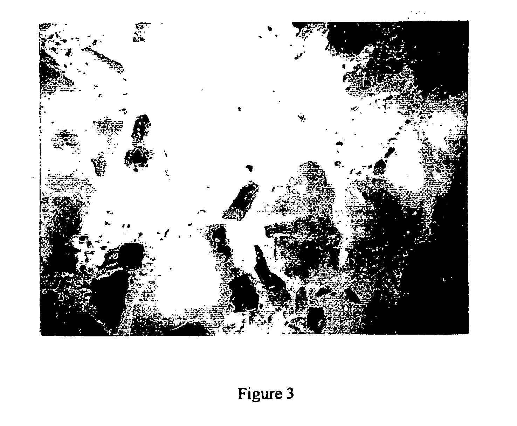

Figure 3 is a photograph of a cementitious flooring tile sample comprising 750 ppm of MICROBAN ADDITIVE AF^{™}. One of the replicates had a surface completely free of fungal growth while the other replicate showed some very minor signs of fungal growth. These dots may be attributed to incomplete mixing of MICROBAN ADDITIVE AF^{™} during the trial.

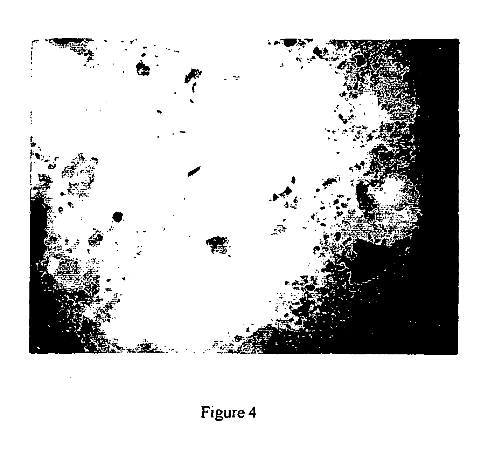

Figure 4 is a photograph of a cementitious flooring tile sample comprising 1000 ppm of MICROBAN ADDITIVE AF^{™}. Samples comprising 1000 ppm of MICROBAN ADDITIVE AF^{™} were completely free of fungal growth.

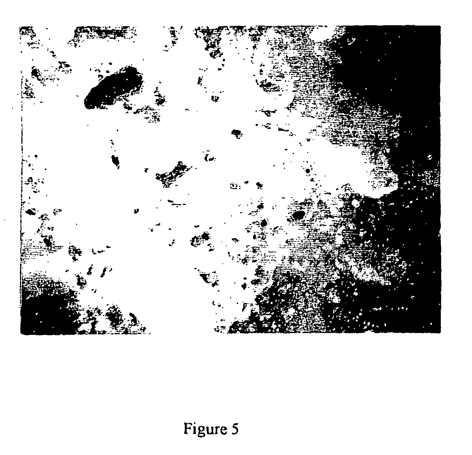

Figure 5 is a photograph of a cementitious flooring tile sample comprising 500 ppm of MICROBAN ADDITIVE ZO1^{™}. Under an optical microscope, the tile surfaces showed signs of fungal growth.

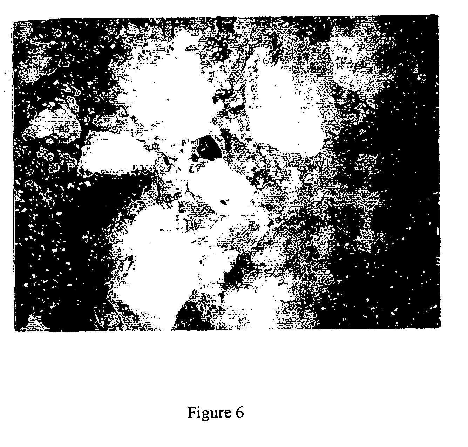

Figure 6 is a photograph of a cementitious flooring tile sample comprising 750 ppm of MICROBAN ADDITIVE ZO1^{™}. The tile surfaces showed signs of fungal growth.

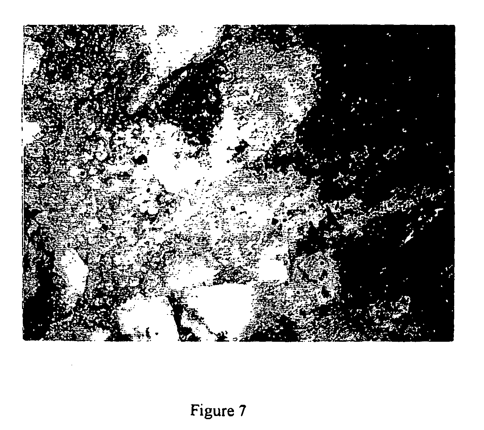

Figure 7 is a photograph of a cementitious flooring tile sample comprising 1000 ppm of MICROBAN ADDITIVE ZO1^{™}. One of the sample replicates comprising 1000 ppm of MICROBAN ADDITIVE ZO1^{™} had a relatively clean surface, but the replicate shown in Figure 7 had spotted heavy fungal growth.

## Claims

1. A method of making a cementitious product having antimicrobial properties, the method comprising:
preparing a cementitious matrix comprising a water and cement slurry and a plasticizing additive;
mixing a natural aggregate and the cementitious matrix;
adding an antimicrobial agent to the aggregate and cementitious matrix;
spreading the mixture of aggregate, cementitious matrix, and antimicrobial agent in a forming device;
deaerating the spread mixture of aggregate, cementitious matrix, and antimicrobial agent by placing the spread mixture under a vacuum;
applying a vibratory motion to the deaerated mixture while the deaerated mixture is under a vacuum; and
curing the deaerated spread mixture to form a cementitious product,
wherein the antimicrobial agent is tolyl diiodomethyl sulfone and is present in the aggregate and cementitious matrix in an amount from 100 ppm to 10,000 ppm.

2. The method according to claim 1, wherein the natural aggregate comprises from 65% to 85% by weight of the total mixture.

3. The method according to claim 2, wherein the natural aggregate comprises from 70% to 75% by weight of the total mixture.

4. The method according to claim 1, wherein the natural aggregate comprises quartz, granite, feldspar, marble, quartzite, or a mixture thereof.

5. The method according to claim 1, further comprising:
combining the natural aggregate with a filler selected from the group consisting of fumed silica, sand, clay, fly ash, cement, broken ceramics, calcium carbonate, mica, silicate flakes, broken glass, glass beads, glass spheres, mirror fragments, steel grit, aluminium grit, carbides, plastic beads, pelletized rubber, ground polymer composites, wood chips, sawdust, paper laminates, pigments, colorants and a mixture thereof.

6. The method according to claim 1, wherein the antimicrobial agent is added to the cement prior to forming the cementitious matrix.

7. The method according to claim 1, wherein the natural aggregate has an average particle size of from 0.1mm to 0.6mm.

8. The method according to claim 1, wherein the cementitious matrix has a water content of from 0.25 to 0.36 parts by weight relative to the weight of the cement.

9. The method according to claim 1, wherein the cementitious matrix is present in an amount in excess of a theoretical amount of cementitious matrix required for the natural aggregate.

10. The method according to claim 1, wherein deaerating comprises placing the spread mixture under a vacuum of not less than 5.33kpa (40mm Hg).

11. The method according to claim 10, wherein the vacuum is carried out for a period of from 10 seconds to 600 seconds.

12. The method according to claim 1, wherein the vibratory motion occurs with a frequency of from 2000 cycles per minute to 4800 cycles per minute at a vacuum of from 9.33kpa (70mm Hg) to 10.67kpa (80mm Hg) for at least 10 seconds.

13. The method according to claim 1, wherein spreading the mixture comprises spreading the mixture to a thickness not less than 5cm.

14. The method according to claim 1, wherein the antimicrobial agent is present in the cementitious matrix prior to mixing the cementitious matrix with the aggregate.

15. The method according to claim 1, further comprising: forming a finished product from the cementitious product.

16. The method according to claim 15, wherein the finished product is a tile, a tabletop, a countertop, an architectural facing, a walkway, a home furnishing, patio furniture, decorative stone, flooring, a mantle, a wall facing, a bathroom fixture, a cutting board, a sink, a shower, a tub or an imitation stone structure.

## Patentansprüche

1. Verfahren zum Herstellen eines Zementprodukts mit antimikrobiellen Eigenschaften, wobei das Verfahren umfasst:
Herstellen einer Zementmatrix, umfassend eine Aufschlämmung aus Wasser und Zement und einem Plastifizierungsadditiv;
Mischen eines natürlichen Aggregats und der Zementmatrix;
Zugeben eines antimikrobiellen Mittels zu dem Aggregat und der Zementmatrix;
Verteilen des Gemischs aus Aggregat, Zementmatrix und antimikrobiellem Mittel in einer Formvorrichtung;
Entlüften des verteilten Gemischs aus Aggregat, Zementmatrix und antimikrobiellem Mittel durch Anordnen des verteilten Gemischs unter Vakuum;
Anwenden einer Vibrationsbewegung auf das entlüftete Gemisch während das entlüftete Gemisch unter einem Vakuum ist; und
Härten des entlüfteten verteilten Gemischs, um ein Zementprodukt zu bilden;
worin das antimikrobielle Mittel Tolyldiiodmethylsulfon ist und in einer Menge von etwa 100 ppm bis 10000 ppm in der Matrix aus Aggregat und Zement vorliegt.

2. Verfahren nach Anspruch 1, worin das natürliche Aggregat von 65 % bis 85 % bezüglich des Gewichts des Gesamtgemischs umfasst.

3. Verfahren nach Anspruch 2, worin das natürliche Aggregat von 70% bis 75 % bezüglich des Gewichts des Gesamtgemischs umfasst.

4. Verfahren nach Anspruch 1, worin das natürliche Aggregat Quarz, Granit, Feldspat, Marmor, Quarzit oder ein Gemisch daraus umfasst.

5. Verfahren nach Anspruch 1, weiterhin umfassend:
Vereinigen des natürlichen Aggregats mit einem Füller, ausgewählt aus der Gruppe, bestehend aus Quarzstaub, Sand, Ton, Flugasche, Zement, Keramikbruch, Calciumcarbonat, Mika, Silikatflocken, gebrochenem Glas, Glaskügelchen, Glassphären, Spiegelteile, Stahlsand, Aluminiumsand, Carbiden, Kunststoffkügelchen, pelletisiertem Gummi, gemahlenen Polymerverbundstoffen, Holzschnitzel, Sägemehl, Papierlaminaten, Pigmenten, Färbemitteln und einem Gemisch davon.

6. Verfahren nach Anspruch 1, worin das antimikrobielle Mittel zu dem Zement vor Bildung der Zementmatrix gegeben wird.

7. Verfahren nach Anspruch 1, worin das natürliche Aggregat eine mittlere Teilchengröße von 0,1 mm bis 0,6 mm aufweist.

8. Verfahren nach Anspruch 1, worin die Zementmatrix einen Wassergehalt von 0,25 bis 0,36 Gewichtsteile relativ zum Gewicht des Zements aufweist.

9. Verfahren nach Anspruch 1, worin die Zementmatrix in einer Menge vorliegt, die über der theoretischen Menge der Zementmatrix ist, die für das natürliche Aggregat erforderlich ist.

10. Verfahren nach Anspruch 1, worin Entlüften das Anordnen des verteilten Gemischs unter einem Vakuum von nicht weniger als 5,33 kPa (40 mm Hg) umfasst.

11. Verfahren nach Anspruch 10, worin das Vakuum für eine Dauer von 10 Sekunden bis 600 Sekunden angelegt wird.

12. Verfahren nach Anspruch 1, worin die Vibrationsbewegung mit einer Frequenz von 2000 Zyklen pro Minute bis 4800 Zyklen pro Minute bei einem Vakuum von 9,33 kPa (70 mm Hg) bis 10,67 kPa (80 mm Hg)) für mindestens 10 Sekunden erfolgt.

13. Verfahren nach Anspruch 1, worin das Verteilen des Gemischs das Verteilen des Gemischs auf eine Dicke von nicht weniger als 5 cm umfasst.

14. Verfahren nach Anspruch 1, worin das antimikrobielle Mittel in der Zementmatrix vor dem Mischen der Zementmatrix mit dem Aggregat vorliegt.

15. Verfahren nach Anspruch 1, weiterhin umfassend: Bilden eines Fertigprodukts aus dem Zementprodukt.

16. Verfahren nach Anspruch 15, worin das Fertigprodukt eine Kachel, eine Tischplatte, eine Arbeitsplatte, eine Bauverkleidung, ein Laufweg, ein Einrichtungsgegenstand, ein Gartenmöbel, Dekorationsstein, Bodenbelag, eine Verkleidung, eine Wandverkleidung, ein Badezimmerinventar, ein Schneidbrett, eine Spüle, eine Dusche, eine Wanne oder eine Steinimitatstruktur ist.

## Revendications

1. Procédé de fabrication d'un produit cimentaire ayant des propriétés antimicrobiennes, le procédé comprenant :
préparer une matrice cimentaire comprend de l'eau et un coulis de ciment et un additif de plastification ;
mélanger un agrégat naturel et la matrice cimentaire ;
ajouter un agent antimicrobien à l'agrégat et à la matrice cimentaire ;
étaler le mélange d'agrégat, de matrice cimentaire et d'agent antimicrobien dans un dispositif de formage ;
désaérer le mélange étalé d'agrégat, de matrice cimentaire et d'agent antimicrobien en mettant le mélange étalé sous un vide ;
appliquer un mouvement de vibration au mélange désaéré pendant que le mélange désaéré est sous vide ; et
durcir le mélange étalé désaéré pour former un produit cimentaire,
où l'agent antimicrobien est un tolyle diiodométhyle sulfone et est présent dans l'agrégat et la matrice cimentaire en une quantité de 100 ppm à 10000ppm.

2. Procédé selon la revendication 1, dans lequel l'agrégat naturel comprend de 65% à 85% en poids du mélange total.

3. Procédé selon la revendication 2, dans lequel l'agrégat naturel comprend de 70% à 75% en poids du mélange total.

4. Procédé selon la revendication 1, dans lequel l'agrégat naturel comprend du quartz, granite, feldspath, marbre, quartzite ou un mélange de ceux-ci.

5. Procédé selon la revendication 1, comprenant en outre :
combiner l'agrégat naturel avec une charge sélectionnée dans le groupe consistant en silice fumée, sable, argile, cendres volantes, ciment, céramiques cassées, calcium carbonate, mica, flocons de silicate, verre cassé, perles de verre, sphères de verre, fragments de miroir, grenailles d'acier, grenailles d'aluminium, carbures, perles plastiques, caoutchouc granulé, composites de polymère broyés, copeaux de bois, sciure de bois, laminés de papier, pigments, colorants et un mélange de ceux-ci.

6. Procédé selon la revendication 1, dans lequel l'agent antimicrobien est ajouté au ciment avant la formation de la matrice cimentaire.

7. Procédé selon la revendication 1, dans lequel l'agrégat naturel à une taille de particule moyenne de 0,1 mm à 0,6mm.

8. Procédé selon la revendication 1, dans lequel la matrice cimentaire a une teneur en eau de 0,25 à 0,36 parties en poids relativement au poids du ciment.

9. Procédé selon la revendication 1, dans lequel la matrice cimentaire est présente en une quantité supérieure à une quantité théorique de matrice cimentaire requise pour l'agrégat naturel.

10. Procédé selon la revendication 1, dans lequel la désaération comprend le placement du mélange étalé sous un vide non inférieur à 5,33 kpa (40mm Hg).

11. Procédé selon la revendication 10, dans lequel le vide est exécuté pendant une période de temps de 10 secondes à 600 secondes.

12. Procédé selon la revendication 1, dans lequel le mouvement de vibration a lieu à une fréquence de 2000 cycles par minute à 4800 cycles par minute à un vide de 9,33 kpa (70mm Hg) à 10,67 kpa (80mm Hg) pendant au moins 10 secondes.

13. Procédé selon la revendication 1, dans lequel l'étalement du mélange comprend l'étalement du mélange en une épaisseur non inférieure à 5cm.

14. Procédé selon la revendication 1, dans lequel l'agent antimicrobien est présent dans la matrice cimentaire avant le mélange de la matrice cimentaire avec l'agrégat.

15. Procédé selon la revendication 1, comprenant en outre : former un produit fini à partir du produit cimentaire.

16. Procédé selon la revendication 15, dans lequel le produit fini est une tuile, un dessus de table, un dessus de comptoir, un revêtement architectural, une passerelle, du mobilier de maison, du mobilier de patio, une pierre décorative, un plancher, une paroi extérieure de mur, un revêtement de mur, une armature de salle de bain, une planche à découper, un évier, une douche, une baignoire ou une structure imitant la pierre.
